Europäisches Patentamt

European Patent Office

Office européen des brevets

(11) Veröffentlichungsnummer: **0 338 551**
**A2**

# (12) EUROPÄISCHE PATENTANMELDUNG

(21) Anmeldenummer: 89107107.8

(22) Anmeldetag: 20.04.89

(51) Int. Cl.⁴: **A62B 19/00 , A62B 23/02**

Ein Antrag gemäss Regel 88 EPÜ auf Berichtigung der Beschreibung liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 22.04.88 DE 3813564

(43) Veröffentlichungstag der Anmeldung:
25.10.89 Patentblatt 89/43

(84) Benannte Vertragsstaaten:
**AT BE CH ES FR GB GR IT LI LU NL SE**

(71) Anmelder: **von Blücher, Hasso**
**Columbusstrasse 58**
**D-4000 Düsseldorf 1(DE)**

Anmelder: **de Ruiter, Ernest, Dr.**
**Höhenstrasse 57a**
**D-5090 Leverkusen 3(DE)**

(72) Erfinder: **von Blücher, Hasso**
**Columbusstrasse 58**
**D-4000 Düsseldorf 1(DE)**
Erfinder: **de Ruiter, Ernest, Dr.**
**Höhenstrasse 57a**
**D-5090 Leverkusen 3(DE)**

(74) Vertreter: **Eggert, Hans-Gunther, Dr.**
**Räderscheidtstrasse 1**
**D-5000 Köln 41(DE)**

(54) **Aktivkohlefilterschicht für Gasmasken.**

(57) Die Aktivkohlefilterschicht für Gasmasken enthält ein hoch luftdurchlässiges, im wesentlichen formstabiles, dreidimensionales Trägergerüst, an dem eine Schicht von körnigen, insbesondere kugelförmigen Aktivkohleteilchen eines Durchmessers von 0,1 bis 1 mm fixiert ist.

Das Trägergerüst kann aus Drähten, Monofilamenten oder Stegen aufgebaut sein, deren Abstand voneinander wenigstens doppelt so groß sein soll, wie der Durchmesser der Aktivkohleteilchen.

Das Trägergerüst kann auch ein großporiger retikulierter PUR-Schaum sein, der ein Litergewicht von 20 bis 60 g und Poren von 1,5 bis 3 mm Durchmesser hat. Das Trägergerüst kann ferner aus übereinander angeordneten Drahtgeflechten oder Drahtgittern sowie aus Kunststoff- oder Drahtwendeln der gleichen bis 10-fachen Länge ihres Durchmessers oder aus Drähten oder Monofilamenten von 2 bis 10 mm Länge, die von zusammengedrehten Metall- oder Kunststoffdrähten gehalten werden und senkrecht zu dieser Achse wendeltreppenartig abstehen, aufgebaut sein.

Trotz eines sehr geringen Druckverlustes ist die Filterleistung hervorragend.

## Aktivkohlefilterschicht für Gasmasken

Alle gängigen Maskenfilter bestehen aus einer auswechselbaren Filterpatrone, die zumindest eine Aktivkohlefilterschicht enthält. Aktivkohle für Maskenfilter hat üblicherweise eine spezifische oder "innere" Oberfläche bestimmt nach der BET-Methode von 500 bis über 2000 m²/g. Es ist eine besondere Eigenschaft der Aktivkohle, daß sie in ihren Mikroporen, welche bis zu 50 % des Gesamtvolumens ausmachen können, sehr unspezifisch eine große Anzahl von Stoffen dauerhaft adsorbieren kann. Toxische Gase z.B. HCN, die durch die normale physikalische Adsorption nur schwach gebunden werden, können mit Hilfe von aufgetragenen Metallverbindungen, z.B. von Silber, Kupfer oder Chrom, durch eine überlagerte Chemiesorption gebunden werden. Die Aktivkohlefilterschicht von Maskenfiltern ist üblicherweise als Schüttfilter ausgebildet, bei denen das zu reinigende Medium ein Fixbett aus den Aktivkohleteilchen durchströmt. Um eine ausreichende Funktionsdauer des Filters zu gewährleisten, muß eine genügende Menge bzw. Masse des Adsorbermaterials vorhanden sein. Gleichzeitig ist aber die Adsorptionskinetik der angebotenen "äußeren" Oberfläche der Teilchen proportional, so daß in dieser Beziehung kleine Teilchen günstiger sind. Hinzu kommt noch, daß größere Aktivkohleteilchen oft nur in den äußeren Bereichen voll genutzt werden. Diese sind meist bereits gesättigt - was eine Unterbrechung und Ersatz der Filterpatrone verlangt - wenn im Inneren die Kohle nur schwach beladen ist. Die Verwendung möglichst kleiner Teilchen in einem Schüttfilter führt jedoch notgedrungen zu einem hohen Druckverlust. In der Praxis wird die Teilchengröße nach unten durch den damit verbundenen Druckverlust begrenzt. Ein weiterer Nachteil von Schüttfiltern ist, daß es durch Aneinanderreiben der Aktivkohleteilchen zu Abriebserscheinungen kommt, und daß die pulverförmige Kohle den Strömungswiderstrand noch zusätzlich erhöht.

Es wird allgemein die Auffassung vertreten, eine gute Filterleistung bedinge notgedrungen einen hohen Durchgangswiderstand, weil nur dann ein guter Kontakt zwischen dem zu reinigenden Gas und den Adsorberkörnern bestünde. Um außerdem Durchbrüche über Hohlräume auszuschließen, die durch sich absetzende Teilchen entstehen, muß die Packung fest komprimiert sein. Damit ist ein hoher Strömungswiderstand der Aktivkohleschüttfilter für Gasmasken vorprogrammiert. Er bedeutet aber nicht nur eine effektive physiologische Belastung des Gasmaskenträgers, sondern verstärkt auch das Gefühlt der Beengung.

Es ist deshalb Aufgabe der vorliegenden Erfindung, eine Aktivkohlefilterschicht für Gasmasken, d.h. einen Maskenfilter mit geringem Strömungswiderstand bei hoher Adsorptionsleistung zu schaffen.

Die erfindungsgemäße Lösung ist eine Aktivkohlefilterschicht für Gasmasken mit einem hoch luftdurchlässigen, im wesentlichen formstabilen dreidimensionalen aus Drähten, Monofilamenten oder Stegen aufgebauten Trägergerüst, an dem eine Schicht von körnigen, insbesondere kugelförmigen Aktivkohleteilchen eines Durchmessers von 0,1 bis 1 mm fixiert ist. Dabei ist der Abstand der Drähte, Monofilamente oder Stege voneinander wenigstens doppelt so groß wie der Durchmesser der Aktivkohleteilchen. Vorzugsweise beträgt er etwa das drei- bis zehnfache. Demgemäß haben die Öffnungen oder Poren des Trägergerüsts einen Durchmesser von 1 bis 5 mm, vorzugsweise 1,5 bis 2,5 mm. Der Durchmesser der Drähte, aus denen das Trägergerüst aufgebaut sein kann, beträgt vorzugsweise 0,1 bis 0,8 mm. Wenn das hoch luftdurchlässige im wesentlichen formstabile dreidimensionale Trägergerüst aus Monofilamenten oder Fäden aus Kunststoffen, Glas oder Gesteinsschmelzen aufgebaut ist, beträgt der Durchmesser vorzugsweise 0,2 bis 1 mm.

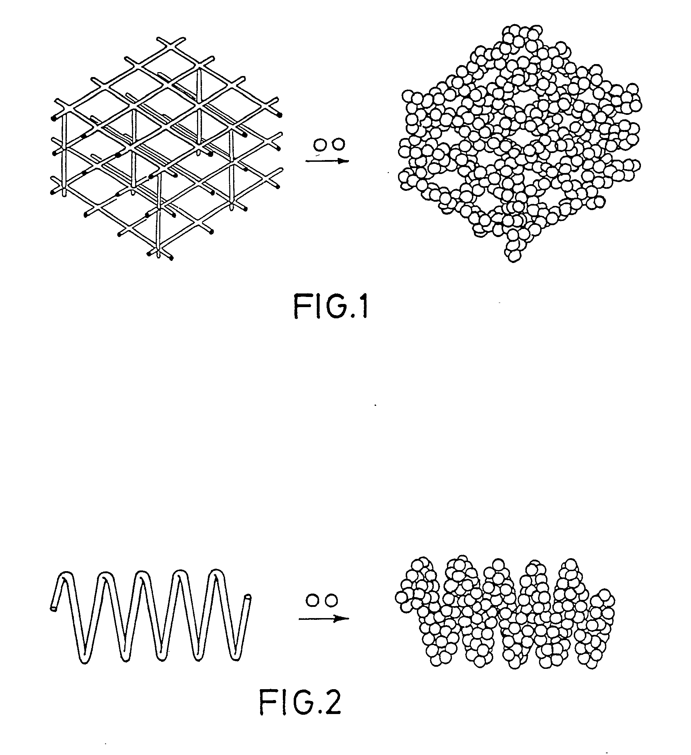

Das Trägergerüst kann aus übereinander angeordneten Drahtgeflechten oder Drahtgittern einer Maschenweite von 1 bis 5 mm, vorzugsweise 1,5 bis 2 mm aufgebaut sein, zwischen denen sich Abstandshalter etwa gleicher Länge wie die angegebenen Durchmesser befinden. Ohne und mit aufgeklebter Kugelkohle ist ein solches Trägergerüst in etwa fünffacher Vergrößerung in der Figur 1 dargestellt.

Ein anderes, für die Zwecke der Erfindung sehr brauchbares Trägergerüst besteht aus Kunststoffoder Drahtwendeln von der gleichen bis etwa zehnfachen Länge ihres Durchmessers. Zu solchen Strukturen lassen sich beispielsweise Monofilamente aus thermoplastischen Kunststoffen mit einem Durchmesser von 0,2 bis 1 mm mit üblichen Mitteln, z.B. Umwickeln eines Dornes mit der gewünschten Steigung leicht herstellen. Die Elastizität reicht aus, um eine solche Wendel im verfestigten Zustand nach Abtrennen auf die gewünschte Länge durch Zusammendrücken von dem Dorn abzustreifen. Derartige Trägerstrukturen in Form einer Wendel haben in der Regel einen Durchmesser von 0,3 bis 10 mm und die gleiche bis etwa zehnfache Länge. Eine derartige Trägerstruktur ohne und mit den daran fixierten Kohleteilchen ist in Figur 2 in etwa dreifacher Vergrößerung dargestellt.

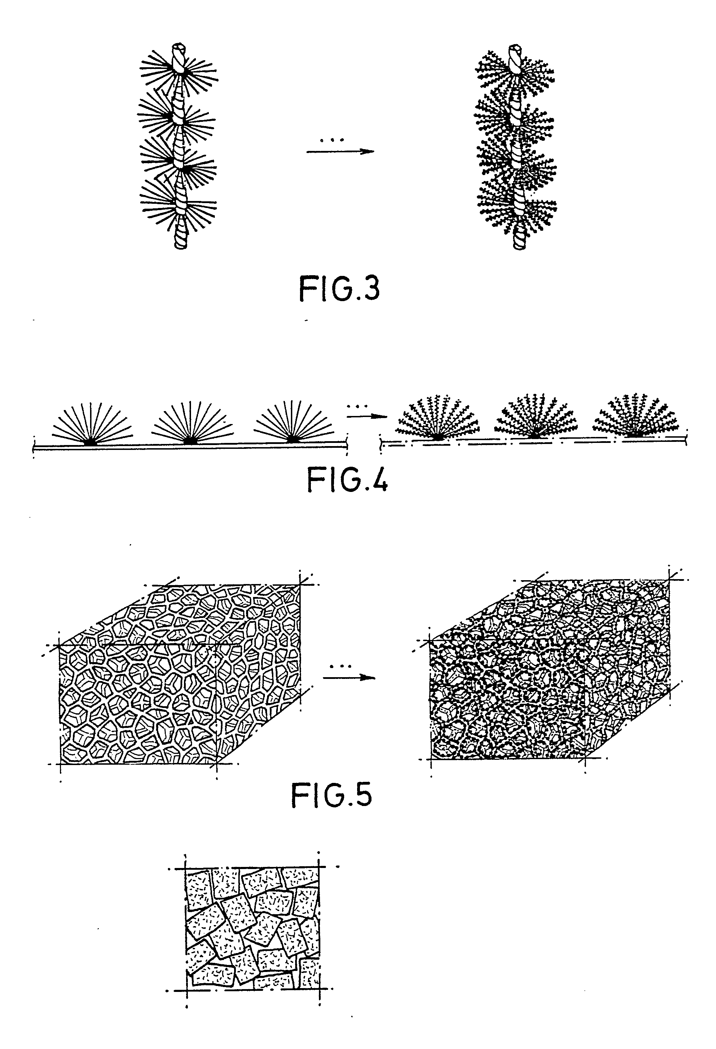

Auch Drähte oder Monofilamente von 2 bis 10 mm Länge, die von zusammengedrehten Metalldrähten oder Kunststoffmonofilamenten gehalten werden und dann senkrecht zu dieser Achse wendentreppenartig abstehen, sind sehr brauchbare Trägerstrukturen für die Zwecke der Erfindung. Derartige Gebilde werden in den verschiedensten Größen als Reagenzglas- oder Flaschenputzer hergestellt. Für die Zwecke der Erfindung werden sie dann auf die Länge von einigen Zentimetern, z.B. 1 bis 10 cm geschnitten. Filterelemente aus dieser Trägerstruktur sind in Figur 3 gezeigt.

Im Handel sind ferner bäumchenartige Faserpinsel, deren Fasern von 1 bis 10 mm Länge strahlenförmig von einem Mittelpunkt ausgehen und meist an einem Garn oder Monofilament befestigt sind, von dem sie für die Zwecke der Erfindung nach Beladung mit den Aktivkohleteilchen z.B. mit einer Spaltledermaschine abgetrennt werden können. Derartige Trägerstrukturen sind in der Figur 4 dargestellt.

Eine bevorzugte Ausführungsform des Trägergerüsts ist ein großporiger retikulierter PUR-Schaum mit einem Litergewicht von 20 bis 60 g und Poren von 1,5 bis 3 mm Durchmesser. Solche Schäume werden in bekannter Weise dadurch hergestellt, daß zunächst ein großer in einer geschlossenen Kammer befindlicher offenporiger Schaumblock evakuiert wird. Dann läßt man ein explosives Gasgemisch einströmen und zündet dieses. Durch die Explosion werden die Zellwände zerstört und schmelzen zu Stegen zusammen. Deshalb haben retikulierte Schäume keine Wandungen, sondern bestehen nur aus einem Gitterwerk von Stegen, die Käfige eines Durchmessers von etwa 1 bis 5 mm bilden. Diese "Schäume" sind elastisch, lassen sich auch bei einigen Zentimetern Dicke noch von Hand leicht zusammendrücken und nehmen dann wieder ihre ursprüngliche Form an. Wenn sie vollständig mit Aktivkohlekügelchen bedeckt sind, wie das die Figur 5 zeigt, sind sie verhältnismäßig steif und mit gleichem Kraftaufwand nicht mehr kompressibel.

Die retikulierten Schäume können bereits die für die Fertigung oder den Einsatz als Aktivkohlefilterschicht optimale Dicke besitzen. Trotz der erforderlichen Dicke von einigen Zentimetern läßt es die offenporige Struktur zu, daß sie auch im Innern mit Aktivkohlekügelchen oder -körnern ummantelt werden können und dann direkt die gewünschte Form der Aktivkohlefilterschicht einer Gasmaske haben, oder daß diese aus einer größeren Platte herausgestanzt werden können. Es ist auch möglich, diese Platten nachträglich zu Elementarfiltern in Form von Streifen oder Schnitzeln etwa von der Größe weniger Kubikzentimeter zu zerschneiden. Damit ist man von der Form der zu füllenden Gegenstände ebenso unabhängig wie bei den als Trägerstrukturen beschriebenen Wendeln, Faserpinseln oder "Flaschenputzern". Die verschiedenen Elementarfilter können dann zusammen mit heterofilen Fasern oder Fäden aus Schmelzkleber in die zu füllenden Hohlräume eingebracht werden. Das ganze läßt sich nach der Füllung verfestigen, so daß auch bei hoher mechanischer Beanspruchung kein Absetzen oder ein Abrieb wie bei Schüttfiltern zu befürchten ist.

Die beschriebenen Möglichkeiten von Trägerstrukturen für Maskenfilter sind nicht als Einschränkung zu betrachten. Der Fachmann kann sich leicht ähnliche Trägerskelette ausdenken, die sich mit den bekannten Methoden der Metall- oder Kunststoffverarbeitung preisgünstig herstellen lassen oder sogar als Abfallprodukte anfallen. Die hoch luftdurchlässigen dreidimensionalen Trägergerüste sollen aufgrund der Dicke oder Festigkeit der Drähte, Monofilamente oder Fäden, aus denen sie aufgebaut sind, im wesentlichen formstabil sein, d.h. sie dürfen nicht einfach zusammenfallen, können aber durchaus elastisch sein, so daß sie sich in einem gewissen Maß zusammendrücken lassen, dann aber wieder in ihre ursprüngliche Form zurückkehren. Wenn daran die körnigen, insbesondere kugelförmigen Aktivkohleteilchen fixiert sind und diese Trägergerüste vorzugsweise vollständig mit den Aktivkohleteilchen gedeckt sind, erhöht sich die Steifigkeit und die Filterelemente bzw. die ganzen Aktivkohlefilterschichten sind dann verhältnismäßig starre, druckfeste Gebilde.

Je nach dem Material, aus dem das Trägergerüst aufgebaut ist, können die Aktivkohleteilchen daran direkt fixiert werden oder es bedarf dazu einer Haftmasse. Es sind Kunststoffmaterialien, insbesondere Fasermaterialien im Handel, die die Eigenschaft besitzen, bei einer erhöhten Temperatur in einem bestimmten Temperaturintervall zunächst oberflächlich klebrig zu werden, ohne zu schmelzen. Diese Eigenschaft, die man als eingebauten Schmelzkleber bezeichnen könnte, kann ausgenutzt werden, um die Aktivkohleteilchen daran zu fixieren. Derartige Fasern können heterofile Fasern aus zwei koaxial angeordneten Komponenten sein, von denen die äußere einen niedrigeren Schmelzpunkt aufweist. Geeignet sind auch unverstreckte amorphe Polyesterfasern, die etwa bei 80 bis 85°C weich und klebrig werden, ohne zu schmelzen, anschließend bei höheren Temperaturen auskristallisieren und dann die thermische Stabilität einer normalen Polyesterfaser haben. Derartige Fasern mit daran fixierten Adsorbentien sind für textile Flächenfilter beispielsweise in der DE-AS-32 00 959 beschrieben.

Eine andere, für die Zwecke der Erfindung bevorzugte, Möglichkeit besteht darin, daß die Aktivkohleteilchen mit einer Haftmasse an dem Trägergerüst fixiert werden. Damit hat der Fachmann mehr Auswahl bezüglich des Materials, aus dem das Trägerskelett aufgebaut ist, sowie hinsichtlich der Haftmasse.

Bei beiden Möglichkeiten wird der Durchmesser der Drähte, Monofilamente oder Stege des Trägergerüsts allein oder mit der Haftmasse so bemessen, daß eine vollständige Umhüllung der Trägerstruktur mit den Aktivkohleteilchen möglich ist, um in einer bevorzugten Ausführungsform der Erfindung ein vollständig mit den Aktivkohleteilchen bedecktes Trägergerüst, d.h. Filterelement zu erzeugen.

Eine erfindungsgemäße Aktivkohlefilterschicht kann auch auf folgende Weise hergestellt werden: Man fixiert die Aktivkohleteilchen vorzugsweise kontinuierlich an den beschriebenen, beim Erwärmen oberflächlich klebrig werdenden Fasern oder Monofilamenten oder nach Überziehen mit einer Haftmasse an endlosen Drähten oder Monofilamenten und zerschneidet diese mit Kugelkohle beladenen Träger dann in kleine Stücke von 0,5 bis 3 cm Länge. Diese Träger können statt gerade, auch sinus- oder zickzackförmig sein, um ein noch offeneres Gelege zu ergeben. Beim Zerschneiden oder später und gegebenenfalls zusammen mit heterophilen Fasern oder Fäden aus Schmelzkleber läßt sich eine Aktivkohlefilterschicht der gewünschten Dicke als regelloses Gelege aus den mit A-Kohle ummantelten Drähten oder Monofilamenten aufbauen und vorzugsweise in einer Form oder der Filterpatrone, gegebenenfalls durch Erwärmen, kompaktieren bzw. verschweißen.

Um die Aktivkohleteilchen am Träger zu fixieren, können sowohl anorganische als organische Haftsysteme eingesetzt werden. Zu letzteren gehören Polymere, insbesondere Acrylsäurederivate, Polyurethane, Polystyrole, Polyvinylacetate sowie Schmelzkleber. Bevorzugt werden Haftmassen, die aus vernetzbaren Polymeren bestehen, die vor ihrer Vernetzung ein Viskositätsminimum durchlaufen. Derartige Haftsysteme wie z.B. die IMPRANIL®-High-Solid-PUR-Reaktivprodukte von BAYER® sind zunächst hoch viskos. d.h. sie bieten eine gute Anfangshaftung, wenn das Trägerskelett mit den Aktivkohleteilchen bestreut wird. Mit der Temperaturerhöhung zeigen sie einen starken Viskositätsabfall, der eine bessere Benetzung der Aktivkohleteilchen und damit nach dem Aushärten durch Vernetzung eine besonders gute Haftung zur Folge hat. Während das Viskositätsminimum durchlaufen wird, bilden sich an den Kontaktstellen zwischen Trägergerüst und Aktivkohleteilchen infolge der Kapillarkräfte kleine Einschnürungen. Wegen der praktisch punktförmigen Fixierung der Aktivkohlekügelchen ist nach dem Aushärten fast deren gesamte Oberfläche dem zu reinigenden Gas zugänglich.

Bei metallischen oder keramischen Trägern kann man Haftmassen aus Emaille oder Glasuren verwenden, wobei wegen der zum Schmelzen dieser Überzüge benötigten hohen Temperaturen in inerter Atmosphäre gearbeitet werden muß, damit die Aktivkohleteilchen nicht durch Oxidation in ihrer Wirkung beeinträchtigt oder gar zerstört werden.

Die Aktivkohleteilchen müssen rieselfähig und abriebfest sein. Ihr Durchmesser ist zweckmäßigerweise drei- bis fünfmal kleiner als der Durchmesser der Poren oder Öffnungen des Trägerskeletts. Handelsübliche Aktivkohlekügelchen eines Durchmessers von 0,1 bis 1 mm sind nicht nur die rieselfähigste Form, sondern halten aufgrund ihrer Symmetrie auch höchste Belastungen aus. Körnige Aktivkohleteilchen sind aber auch noch geeignet, sofern sie nicht zu kantig oder in der Form zu unregelmäßig sind, weil es darauf ankommt, daß die Aktivkohleteilchen bei ihrer Fixierung am Trägergerüst auch noch in Strukturen von mehreren Zentimetern Dicke eindringen können.

Es ist somit durchaus möglich, direkt Aktivkohlefilterschichten in der für Gasmasken üblichen Dicke zu erzeugen.

Für Maskenfilter geeignete Aktivkohleteilchen sollen eine innere Oberfläche von 600 bis 2000 $m^2/g$, vorzugsweise 1000 bis 1600 $m^2/g$ bestimmt nach der BET-Methode haben. Die Aktivkohleteilchen sollten sehr druckfest sein und sie sind vorzugsweise gegenüber Feuchtigkeit hochgradig unempfindlich. Eine sehr abriebfeste kugelförmige Aktivkohle läßt sich bei spielsweise aus Steinkohlenteerpech- oder Petroleumdestillationsrückständen herstellen. Durch eine besondere Nachbehandlung ist eine zusätzliche Härtung der Oberfläche sowie eine bemerkenswerte Unempfindlichkeit gegenüber Feuchtigkeit zu erreichen. Die Herstellung geeigneter Aktivkohlekügelchen ist beispielsweise in EP-B-118 618, DE-B-29 32 571 und DE-A-30 41 115 beschrieben.

Um die Abriebfestigkeit zu erhöhen, kann die Aktivkohle an ihrer Oberfläche auch in einer Kunststoffdispersion oder einer Steinkohlenteerpechlösung bzw. Bitumenlösung imprägniert und einer leichten Nachaktivierung unterworfen werden. Die Empfindlichkeit gegenüber Wasserdampf läßt sich durch Zugabe von Ammoniakgas während der Nachaktivierung und Abkühlung auf 100°C unter Luftausschluß wesentlich herabsetzen.

Die Aktivkohleteilchen können Metallverbindungen, insbesondere der Metalle Silber, Kupfer und Chrom enthalten. Daneben können inkapsulierte Enzyme vorliegen, die Gifte abbauen, wie das in der EP-B-118 618 beschrieben ist.

Mit den beschriebenen Filtern wurden ausgezeichnete Abscheidungseffekte von Schadstoffen und Gasen bei extrem niedrigen Druckverlusten erzielt. Es hat sich nämlich überraschenderweise gezeigt, daß die Aktivkohlekörner für eine hohe Wirksamkeit bei geringem Druckverlust nicht durchströmt, sondern nur angeströmt zu werden brauchen. Die Brown'sche Bewegung der Gasmoleküle genügt, um eine hohe Adsorptionsgeschwindigkeit zu erzielen. Der Druckverlust einer erfindungsgemäßen Aktivkohlefilterschicht beträgt bei einer Dicke von 4 cm und kreisförmigem Querschnitt von 100 m² bei Durchströmen mit einem Luftstrom von einem Liter pro Sekunde weniger als 10 mm, vorzugsweise weniger als 5, insbesondere weniger als 2 mm Wassersäule. Eine aufgelockerte Aktivkohlefilterschicht gemäß der Erfindung hat ein größeres Volumen als ein Schüttfilter bei gleicher Leistung, aber erheblich geringerem Strömungswiderstand. Die heute für Aktivkohlefilterschicht einer Gasmaske übliche Menge von 100 g Aktivkohle kann bei den erfindungsgemäßen Trägerstrukturen in einem Volumen von etwa 350 ml untergebracht werden.

Wegen der vielfältigen Möglichkeiten der Formgebung des erfindungsgemäßen Filtermaterials kann auch die Form des Maskenfilters den verschiedensten Bedürfnissen angepaßt werden. So läßt sich der Filter durchaus in einer Haubenmaske, z.B. um den Kopf oder im Nacken unterbringen und dient dann als zusätzlicher Kopf-bzw. Nackenschutz gegen Stöße. Dabei sollte die gefilterte Luft an den Augen vorbeiströmen, um das Beschlagen der Klarscheiben des Augenfensters zu vermeiden. Ein plattenförmiger Filter kann auf der Brust oder dem Rücken getragen und mit dem Maskenkörper durch einen flexiblen Schlauch verbunden sein. Zylindrische Filterelemente mit einem Durchmesser von einigen Zentimetern können auch direkt in einem flexiblen Schlauch untergebracht oder mit geeigneten Mitteln zu einem schlauchförmigen Gebilde zusammengekoppelt werden. Solche auswechselbaren Filterelemente können auch unterschiedliche Funktionen haben.

Die Eintrittsöffnung der die Filterelemente enthaltenden oder daraus zusammengesetzten Schläuche befindet sich zweckmäßig auf der Innenseite eines Schutzanzuges.

Beispiel 1

Zehn Drahtgitter, 50 x 60 cm groß, Maschenweite 2 mm, Drahtstärke 0,30 mm, wurden unter Verwendung von 2 mm starken Stahlröhrchen als Abstandshalter zu einem ca. 4 cm hohen Paket zusammengefügt und in eine Mischung, bestehend aus einem "maskierten" präpolymeren Polyurethan (Bayer HS 62), eines Emulgators (Bayer HS DW), eines Vernetzers (Bayer HS C) und Wasser getaucht. Die Viskosität (ca. 2000 mP.s) war so eingestellt, daß das überschüssige Haftmittel leicht abgeschüttelt werden konnte und das dreidimensionale Gerüst mit 440 g Haftmittel überzogen war. Dieses wurde in eine große Schale gelegt und mit Aktivkohle in Kugelform (Durchmesser 0,3 - 0,6 mm) bestreut. Dabei blieben ca. 3 kg Adsorber im Gerüst hängen. Durch Temperaturerhöhung auf 170° C wurde die Haftschicht vernetzt. Die Aktivkohlekügelchen wurden sehr fest, aber nur punktförmig, auf dem Trägerskelett fixiert. Um die Luftdurchlässigkeit zu messen, wurde eine seitlich abgedichtete Fläche von ca. 100 cm² einem Luftstrom von 1 1/sec. unterworfen. Der Druckverlust betrug weniger als 2 mm Wassersäule. Dem Luftstrom wurde ferner eine Menge von 120 mg $CCl_4$ pro Liter zugegeben. Nach Durchgang durch das Filtermaterial betrug die $CCl_4$-Konzentration weniger als 1 mg/l. Erst nach Adsorption von fast 50 g $CCl_4$ kündigten sich Durchbrüche an.

Beispiel 2

Als Trägerskelett wurde ein 4 cm dicker, großporiger, retikulierter Polyurethanschaum mit einem Litergewicht von 80 g und einem Porendurchmesser von 2,5 - 3 mm verwendet. Dieser Schaum wurde mit der gleichen Haftmasse wie in Beispiel 1 abgequetscht (Kleberauftrag, trocken 55 g/l), mit Aktivkohlekügelchen wie in Beispiel 1 beladen (ca. 260 g/l) und schließlich kurzzeitig auf 170° C erhitzt. Es resultierte ein Filtermaterial mit sehr geringem Druckverlust (bei 1 l/sec. auf 100 cm², etwa 1 mm Wassersäule). Die adsorptiven Eigenschaften entsprachen etwa denen des Beispiels 1.

Beispiel 3

Das gleiche Trägerskelett wie in Beispiel 1 wurde mit dem Schlicker eines niedrig schmelzenden Emaill überzogen, auf dem Aktivkohlekügelchen zum Haften gebracht wurden. Nach Trocknung wurde der Filter in einer $N_2$-Atmosphäre einer Aushärtung bei 650° C unterworfen. Ein derartiger Filter ist besonders für hohe Betriebstemperaturen und aggressive Stoffe geeignet.

**Ansprüche**

1. Aktivkohlefilterschicht für Gasmasken, enthaltend ein hoch luftdurchlässsiges, im wesentlichen formstabiles, dreidimensionales, aus Drähten, Monofilamenten oder Stegen aufgebautes Trägergerüst, an dem eine Schicht von körnigen, insbesondere kugelförmigen, Aktivkohleteilchen eines Durchmessers von 0,1 bis 1 mm fixiert ist, wobei der Abstand der Drähte, Monofilamente oder Stege voneinander wenigstens doppelt so groß ist, wie der Durchmesser der Aktivkohleteilchen.

2. Filterschicht nach Anspruch 1, dadurch gekennzeichnet, daß die Öffnungen oder Poren des Trägergerüsts einen Durchmesser von 1 bis 5 mm, vorzugsweise 1,5 bis 2,5 mm haben.

3. Filterschicht nach Anspruch 1 oder 2, dadurch gekennzeichnet, daß der Durchmesser der Drähte, Monofilamente oder Stege des Trägergerüsts eine vollständige Umhüllung des Trägergerüsts mit den daran fixierten Aktivkohleteilchen ermöglicht.

4. Filterschicht nach einem der Ansprüche 1 bis 3, dadurch gekennzeichnet, daß das Trägergerüst vollständig mit den Aktivkohleteilchen bedeckt ist.

5. Filterschicht nach einem der Ansprüche 1 bis 4, dadurch gekennzeichnet, daß die Aktivkohleteilchen mit einer Haftmasse an dem Trägergerüst fixiert sind.

6. Filterschicht nach einem der Ansprüche 1 bis 5, dadurch gekennzeichnet, daß die Haftmasse aus Polymeren, insbesondere Acrylsäurederivaten, Polyurethanen, Polystyrolen, Polyvinylacetaten oder Schmelzklebern besteht.

7. Filterschicht nach einem der Ansprüche 1 bis 6, dadurch gekennzeichnet, daß die Haftmasse aus vernetzbaren Polymeren besteht, welche vor ihrer Vernetzung ein Viskositätsminimum durchlaufen.

8. Filterschicht nach einem der Ansprüche 1 bis 5, dadurch gekennzeichnet, daß die Haftmasse aus schmelzbaren anorganischen Gemischen, insbesondere Gläsern, Glasuren oder Emails besteht.

9. Filterschicht nach einem der Ansprüche 1 bis 8, dadurch gekennzeichnet, daß die Aktivkohleteilchen eine innere Oberfläche von 600 bis 2.000 $m^2/g$, vorzugsweise 1.000 bis 1.600 $m^2/g$ haben.

10. Filterschicht nach einem der Ansprüche 1 bis 9, dadurch gekennzeichnet, daß 50 bis 300 g Aktivkohle pro Liter vorliegen.

11. Filterschicht nach einem der Ansprüche 1 bis 10, dadurch gekennzeichnet, daß die Aktivkohleteilchen sehr druckfest sind.

12. Filterschicht nach einem der Ansprüche 1 bis 11, dadurch gekennzeichnet, daß die Aktivkohleteilchen gegenüber Feuchtigkeit hochgradig unempfindlich sind.

13. Filterschicht nach einem der Ansprüche 1 bis 12, dadurch gekennzeichnet, daß die Aktivkohleteilchen mit Metallsalzen, insbesondere der Metalle Silber, Kupfer und Chrom imprägniert sind.

14. Filterschicht nach einem der Ansprüche 1 bis 13, dadurch gekennzeichnet, daß die Aktivkohleteilchen inkapsulierte Enzyme enthalten.

15. Filterschicht nach einem der Ansprüche 1 bis 14, dadurch gekennzeichnet, daß das Trägergerüst aus Kunststoff besteht.

16. Filterschicht nach Anspruch 15, dadurch gekennzeichnet, daß das Trägergerüst ein großporiger retikulierter PUR-Schaum ist.

17. Filterschicht nach Anspruch 16, dadurch gekennzeichnet, daß der großporige retikulierte PUR-Schaum ein Litergewicht von 20 bis 60 g und Poren von 1,5 bis 3 mm Durchmesser hat.

18. Filterschicht nach einem der Ansprüche 1 bis 14, dadurch gekennzeichnet, daß das Trägergerüst aus übereinander angeordneten Drahtgeflechten oder Drahtgittern aufgebaut ist.

19. Filterschicht nach einem der Ansprüche 1 bis 14, dadurch gekennzeichnet, daß das Trägergerüst aus Kunststoff- oder Drahtwendeln der gleichen bis 10-fachen Länge ihres Durchmessers aufgebaut ist.

20. Filterschicht nach einem der Ansprüche 1 bis 14, dadurch gekennzeichnet, daß die Trägerstruktur aus Drähten oder Monofilamenten von 2 bis 10 mm Länge, die von zusammengedrehten Metall- oder Kunststoffdrähten gehalten werden und senkrecht zu dieser Achse wendeltreppenartig abstehen, aufgebaut ist.

21. Filterschicht nach einem der Ansprüche 1 bis 14, dadurch gekennzeichnet, daß die Trägerstruktur aus strahlenförmig von einem Mittelpunkt ausgehenden Faserpinseln von 2 bis 10 mm Länge aufgebaut ist.

22. Filterschicht nach Anspruch 1 bis 21, dadurch gekennzeichnet, daß die Trägerstrukturen durch heterofile Fasern oder Fäden aus Schmelzkleber miteinander verbunden, z.B. verschweißt sind.

23. Filterschicht nach einem der Ansprüche 1 bis 22, dadurch gekennzeichnet, daß ihr Druckverlust bei einer Dicke von 4 cm und kreisförmigem Querschnitt von 100 $cm^2$ bei Durchströmen mit einem Luftstrom von einem Liter pro Sekunde weniger als 10 mm, vorzugsweise weniger als 2 mm Wassersäule beträgt.

24. Haubenmaske, dadurch gekennzeichnet, daß sie eine Filterschicht nach einem oder mehreren der Ansprüche 1 bis 23 enthält.

25. Haubenmaske nach Anspruch 24, dadurch gekennzeichnet, daß die Filterschicht als Kopf- oder Nackenschutz ausgebildet ist.

26. Gasmaske, dadurch gekennzeichnet, daß die Filterschicht nach einem oder mehreren der Ansprüche 1 bis 23 plattenförmig ausgebildet ist, so daß sie auf der Brust oder dem Rücken getragen werden kann und mit dem Maskenkörper durch einen flexiblen Schlauch verbunden ist.

27. Gasmaske, dadurch gekennzeichnet, daß zylindrische Filterelemente nach einem der mehreren der Ansprüche 1 bis 23 mit einem Durchmesser von einigen Zentimetern in einem flexiblen Schlauch angeordnet sind.

28. Gasmaske, dadurch gekennzeichnet, daß auswechselbare, vorzugsweise zylindrische, Filterelemente, die unterschiedliche Funktionen haben können, zu einem Schlauch zusammengefügt sind.

FIG.1

FIG.2

FIG.3

FIG.4

FIG.5